# EUROPEAN PATENT SPECIFICATION

(11) **EP 3 862 798 B1**
(45) Date of publication and mention of the grant of the patent: **24.01.2024**
(21) Application number: 19869347.5
(22) Date of filing: 01.10.2019
(51) Int. Cl.: G02B 5/02, B32B 3/30, B32B 7/023, G02B 5/28, G09F 19/12, G02B 3/00

(54) **COLORING STRUCTURE**
FÄRBUNGSSTRUKTUR
STRUCTURE COLORANTE

(30) Priority: 03.10.2018 JP 2018188433
(43) Date of publication of application: 11.08.2021
(73) Proprietor: Toppan Printing Co., Ltd., Tokyo 110-0016 (JP)
(72) Inventor: KAWASHITA, Masashi, Tokyo 110-0016 (JP)
(74) Representative: Plasseraud IP
(86) International application number: PCT/JP2019/038738
(87) International publication number: WO 2020/071359

(56) References cited:
- WO-A1-00/72275
- WO-A1-2018/123465
- JP-A- 2003 500 665
- JP-A- 2013 010 315
- JP-A- 2018 112 732
- US-A1- 2011 216 414

## Description

### [Technical Field]

The present disclosure relates to a color production structure which exhibits a structural color utilizing light interference.

### [Background Art]

Color production structures are known that produce color by utilizing light interference such as thin film interference and multilayer film interference. With such a color production structure attached to an article, the article is provided with exterior decoration which is different from the decoration provided by a color exhibited by a pigment. Therefore, these color production structures make it possible to improve the design properties of the article (see, for example, PTL 1). In addition, PTL 2 discloses a transparent surface, PTL 3 discloses a reflective diffuser plate, and PTL 4 discloses an optical element.

### [Citation List]

### [Patent Literature]

PTL 1: JP 2011-189519 A
PTL 2: WO 00/72275 A1
PTL 3: WO 2018/123465 A1
PTL 4: US 2011/216414 A1

### [Summary of the Invention]

### [Technical Problem]

In dielectric layers that cause thin film interference or multilayer film interference, the wavelength range of the light intensified by interference is determined by the optical path difference of the light reflected at the interfaces between the thin films included in the dielectric layer. The optical path difference changes with the incidence angle of the incident light, and the light that has been intensified by interference emerges in the specular reflection direction of the incident light. As a result, light in a specific wavelength range that has been intensified by interference emerges only in a specific direction. Therefore, when the observation angle with respect to the color production structure changes, the hue and brightness of the observed color change significantly. Consequently, in order to broaden the uses of color production structures, structures that exhibit a specific color across a wide range of observation angles are being sought.

The present disclosure has an object of providing a color production structure which is capable of suppressing a change in color caused by a change in the observation angle.

### [Solution to Problem]

A color production structure that solves the above problem includes a structure layer and an optical layer. The structure layer has an uneven structure on a surface thereof, the uneven structure including a plurality of uneven elements each being a convex or a concave portion. The optical layer is a laminated film on the uneven structure and has a surface shaped to conform to the uneven structure, the optical layer configured such that reflected light enhanced by interference emerges from the optical layer. Each of the uneven elements has a longitudinal width and a lateral width in plan view along a thickness direction of the structure layer, each of the longitudinal width and lateral width of the respective uneven elements having a value within a range from 40 µm to 50 µm inclusive. Each of the uneven elements has a dimension in the thickness direction of the structure layer, the dimension of each uneven element continuously increasing from the peripheral edge to the center thereof in the plan view. A ratio of a maximum value of the dimension of each of the uneven elements to the lateral width thereof is set to be within a range from 0.1 to 1.0 inclusive.

According to the configuration above, the optical layer has a surface shaped to conform to the uneven structure of the structure layer, which results in reflected light in a specific wavelength range that has been intensified by interference being scattered and emerging in various directions. Therefore, a change in the color caused by a change in the observation angle with respect to the color production structure can be suppressed, and a specific color becomes visible across a wide range of observation angles.

### [Advantageous Effects of the Invention]

According to the present disclosure, it is possible to suppress a change in the color of a color production structure due to a change in the observation angle.

### [Brief Description of the Drawings]

Fig. 1 is a cross-sectional view showing an optical element of a color production structure according to a first embodiment of the color production structure.
Fig. 2 is a perspective view of an uneven structure layer included in the color production structure of the first embodiment.
Fig. 3 is a plan view and cross-sectional view of the uneven structure layer included in the color production structure of the first embodiment.
Fig. 4 is a cross-sectional view of a color production seal to which a color production structure of the first embodiment has been applied.
Fig. 5 is a cross-sectional view of a transfer sheet to which a color production structure of the first embodiment has been applied.
Fig. 6 is a diagram showing a state where the color production structure of the first embodiment has been fixed to an adherend.
Fig. 7 is a cross-sectional view of an optical element of a color production structure according to a second embodiment of the color production structure.
Fig. 8 is a cross-sectional view of a color production seal to which a color production structure of the second embodiment has been applied.
Fig. 9 is a cross-sectional view of a transfer sheet to which a color production structure of the second embodiment has been applied.
Fig. 10 is a cross-sectional view of a color production seal to which a color production structure according to a third embodiment has been applied.
Fig. 11 is a cross-sectional view showing another example of a color production seal to which a color production structure according to the third embodiment has been applied.
Fig. 12 is a diagram showing a state where the color production structure of the third embodiment has been fixed to an adherend.
Fig. 13 is a diagram showing the relationship between the incidence angle and the reflection angle in an optical system used in an example.
Fig. 14 is a diagram showing measurement results of the reflection spectral characteristics for the color production structure of the example.
Fig. 15 is a diagram showing measurement results of the reflection angle dependence of the reflected light intensity for the color production structure of the example.

### [Description of the Embodiments]

### (First Embodiment)

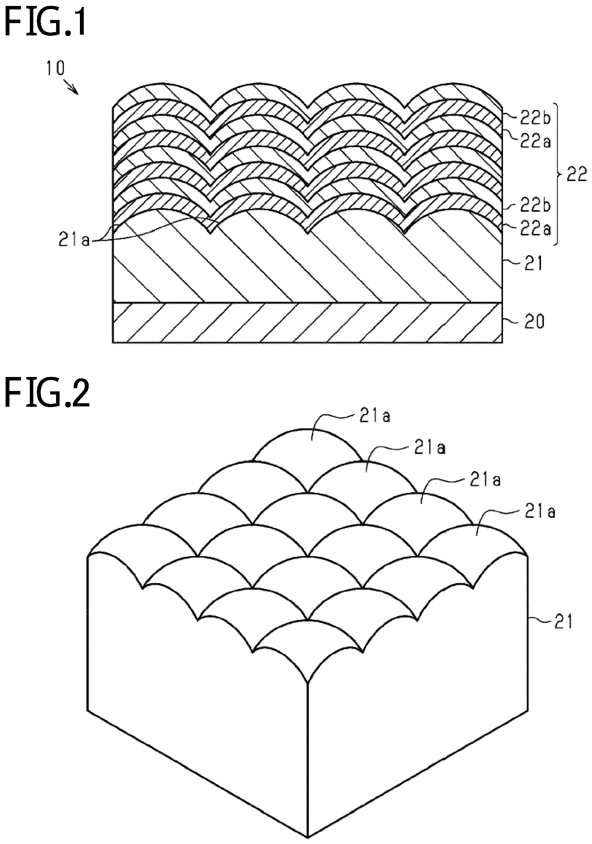

A first embodiment of a color production structure will be described with reference to Figs. 1 to 6. Although the wavelength ranges of the incident light and the reflected light with respect to the color production structure are not particularly limited, a color production structure intended for light in the visible range will be described in the following embodiments as an example. In the following description, light in the visible range refers to light in a wavelength range of 360 nm or more and 830 nm or less.

### [Optical Element]

First, the configuration of an optical element constituting the main part of the color production structure will now be described.

As shown in Fig. 1, an optical element 10 includes a substrate 20, an uneven structure layer 21, which is an example of a structure layer, and a multilayer film layer 22, which is an instance of an optical layer.

The substrate 20 is a flat layer and is transparent to the light in the visible range. For example, a synthetic quartz substrate or a film made of resin such as polyethylene terephthalate (PET) is used as the substrate 20. In terms of increasing the flexibility of the color production structure, the substrate 20 is preferably made of resin. The film thickness of the substrate 20 is, for example, 10 µm or more and 100 µm or less.

The uneven structure layer 21 is positioned on the substrate 20, and is supported by the substrate 20. The uneven structure layer 21 has an uneven structure on the surface on an opposite side to that facing the substrate 20. The uneven structure is comprised of a plurality of convexes 21a. The convex 21a, which is an instance of an uneven element, protrudes toward the multilayer film layer 22.

The uneven structure layer 21 is made of resin that is transparent to light in the visible range, i.e., is configured by the resin that transmits light in the visible range. For instance, an ultraviolet curable resin or a thermoplastic resin is used as the resin constituting the uneven structure layer 21.

The multilayer film layer 22 covers the surface of the uneven structure layer 21, and has a surface shaped to conform to the uneven structure of the uneven structure layer 21. The multilayer film layer 22 is a laminate consisting of a plurality of thin films, where high refractive index layers 22a and low refractive index layers 22b are alternately laminated. Each of the high refractive index layers 22a and low refractive index layers 22b is a dielectric thin film. The refractive index of the high refractive index layers 22a is higher than the refractive index of the low refractive index layers 22b. For example, in the multilayer film layer 22, the layer in contact with the uneven structure layer 21 is a high refractive index layer 22a, and the outermost layer on a side opposite to that facing the uneven structure layer 21 is a low refractive index layer 22b.

The high refractive index layers 22a and the low refractive index layers 22b are made of materials that are transparent to light in the visible range, namely, are configured by materials that transmit light in the visible range. The materials of the high refractive index layers 22a and the low refractive index layer 22b are not limited as long as the refractive index of the high refractive index layers 22a is higher than the refractive index of the low refractive index layers 22b. However, the larger the difference in the refractive index between the high refractive index layers 22a and the low refractive index layers 22b, the smaller the number of laminations required to obtain a high intensity of reflected light. From such an aspect, for instance, when the high refractive index layers 22a and the low refractive index layers 22b are made of inorganic materials, the high refractive index layers 22a that are made of titanium dioxide (TiO₂) and the low refractive index layers 22b that are made of silicon dioxide (SiO₂) are preferable. The high refractive index layers 22a and the low refractive index layers 22b may each be made of organic material.

The film thickness of the high refractive index layers 22a and the low refractive index layers 22b may be designed using a transfer matrix method or the like, depending on the demanded color to be produced by the color production structure. The film thickness of the high refractive index layers 22a and low refractive index layers 22b is, for example, selected from a range of 10 nm or more and 500 nm or less. The film thickness of the layers constituting the multilayer film layer 22 may all be the same, or may be different depending on the layer. Fig. 1 illustrates an example of the multilayer film layer 22 composed of eight layers in which high refractive index layers 22a and low refractive index layers 22b are alternately laminated in this order from the uneven structure layer 21. The number of layers constituting the multilayer film layer 22 and the order in which the high refractive index layers 22a and the low refractive index layers 22b are laminated are not limited to this, and the high refractive index layers 22a and the low refractive index layers 22b only have to be designed such that reflected light of a required wavelength range is obtained. For instance, a low refractive index layer 22b may be in contact with the uneven structure layer 21, and high refractive index layers 22a and low refractive index layers 22b may be alternately laminated thereon. Moreover, the outermost layer of the multilayer film layer 22 on the side opposite to that facing the uneven structure layer 21 may be either a high refractive index layer 22a or a low refractive index layer 22b. In addition, as long as the high refractive index layers 22a and the low refractive index layers 22b are alternately laminated, the material of the layer in contact with the uneven structure layer 21 may be the same as the material of the outermost layer. Further, the multilayer film layer 22 may also be formed of a combination of layers having three or more different refractive indexes.

In summary, the multilayer film layer 22 only has to be configured so that mutually adjacent layers have different refractive indexes such that the light reflectance in a specific wavelength range of the incident light entering the multilayer film layer 22 is higher than the light reflectance in other wavelength ranges.

When light enters the optical element 10, light reflected at the interfaces between the high refractive index layers 22a and the low refractive index layers 22b of the multilayer film layer 22 causes interference. Furthermore, by the uneven structure of the uneven structure layer 21, the angle of the interfaces to the incident light varies inside the optical element 10, and reflected light emerges in various directions. That is, the reflected light from the multilayer film layer 22 is scattered. As a result, when incident light enters in various directions, light in a specific wavelength range intensified by interference emerges in various directions, and a specific color becomes visible across a wide range of observation angles. The reflected light in the specific wavelength range can be observed when the color production structure is observed from the side of the multilayer film layer 22 on which the uneven structure layer 21 is positioned, or when the color production structure is observed from the side of the multilayer film layer 22 opposite to that facing the uneven structure layer 21.

The optical element 10 may not employ the substrate 20. In the case that the optical element 10 does not employ the substrate 20, the uneven structure layer 21 may be made of a material other than a resin, such as synthetic quartz.

### [Uneven Structure]

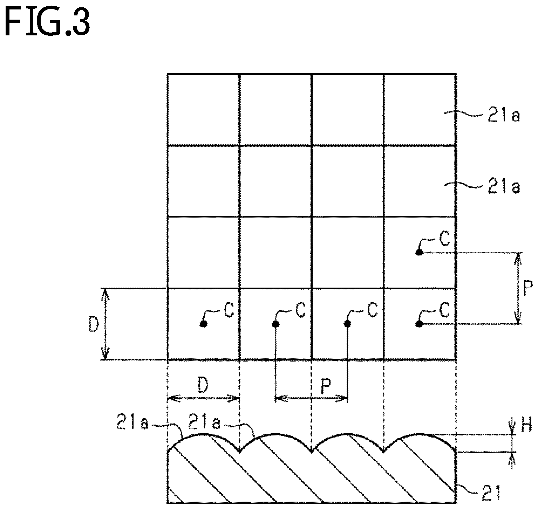

The uneven structure of the uneven structure layer 21 will be described in detail. Fig. 2 is a perspective view of the uneven structure layer 21, and Fig. 3 is a plan view and cross-sectional view of the uneven structure layer 21.

As shown in Fig. 2, the uneven structure has a structure in which a plurality of convexes 21a are arranged without gaps therebetween. For instance, each convex 21a forms a microlens, and the uneven structure layer 21 forms a microlens array.

As shown in Fig. 3, in plan view of the uneven structure viewed in a direction along the thickness direction of the uneven structure layer 21, each convex 21a preferably has a quadrangular shape, and in particular, preferably has a square shape. Preferably, the plurality of convexes 21a have the same square shape as each other, and are arranged in a square grid along the directions in which the sides of the square extends.

The width D of the convex 21a is the length of one side of the square, and the width D is constant in the plurality of convexes 21a. The width D is 10 µm or more and 100 µm or less. If the width D is 10 µm or more, it is possible to suppress the occurrence of light diffraction due to the regular arrangement of the convexes 21a. Therefore, because the appearance of iridescence due to diffraction is suppressed, the visibility of the color due to the reflected light from the multilayer film layer 22 is enhanced. Moreover, if the width D is 10 µm or more, the convex 21a is not excessively fine, which allows the uneven structure to be easily formed, and the efficiency of producing the color production structure to be improved. On the other hand, if the width D is 100 µm or less, it is possible to suppress visual recognition of the convex 21a by the human eye as a single structure. In terms of achieving a balance in these respective effects, the width D is limited according to the invention to a range from 40 µm or more and 50 µm or less.

The maximum height H of the convex 21a is the maximum value of the dimension of the convex 21a along the thickness direction of the uneven structure layer 21. In other words, the maximum height H is the length between the base end and the tip end of the convex surface of the convex 21a in the thickness direction. The maximum height H of the plurality of convexes 21a is constant. For example, the maximum height H is preferably 10 µm or less.

The aspect ratio of the convex 21a, namely, the ratio of the maximum height H to the width D is 0.1 or more and 1.0 or less. If the aspect ratio is 0.1 or more, because an uneven structure is formed which has sufficient undulations compared to a flat surface, a strong scattering effect is obtained due to the uneven structure.

On the other hand, if the aspect ratio is 1.0 or less, reflection of light by the convex 21a can be suppressed. Of the incident light, a portion of the light outside the specific wavelength range which is reflected and causes interference in the multilayer film layer 22 is transmitted through the multilayer film layer 22. If reflection by the convex 21a occurs strongly, light in the wavelength range transmitted through the multilayer film layer 22 may be reflected by the convex 21a and returned to the space from which the incident light entered. The light transmitted through the multilayer film layer 22 mainly has a wavelength range which corresponds to a complementary color of the color due to the reflected light from the multilayer film layer 22. Therefore, when light in the wavelength range transmitted through the multilayer film layer 22 is visually recognized, the visibility of the color due to the reflected light from the multilayer film layer 22 decreases. In contrast, as mentioned above, if the aspect ratio is 1.0 or less, because the light transmitted through the multilayer film layer 22 is suppressed from being reflected and the reflected light from being visually recognized, it is possible to suppress deterioration in the visibility of the color due to the reflected light intensified by interference in the multilayer film layer 22. The convex 21a is preferably designed to have a shape that does not readily reflect light in the wavelength range transmitted through the multilayer film layer 22.

The height of each convex 21a continuously changes and gradually increases in the direction in which the uneven structure layer 21 extends, that is, from the peripheral edge of the convex 21a toward its center in the direction orthogonal to the thickness direction. Further, the convex 21a has the maximum height at the center of the convex 21a in the direction in which the uneven structure layer 21 extends. In other words, the height of the convex 21a continuously increases from the portion corresponding to the peripheral edge of the convex 21a in the plan view toward the portion corresponding to the center of the convex 21a in the plan view. In addition, the convex 21a has the maximum height at the portion in which the center C of the convex 21a, which is the center of gravity of the square, is located in the plan view.

In a cross-section passing through the center C along the thickness direction, the surface serving as the convex surface of the convex 21a forms a curve which is bent so as to protrude toward the multilayer film layer 22. The curvature of the curve may or may not be constant. For example, the curvature of the curve formed by the surface may be different at the peripheral edge and the center of the convex 21a.

In a configuration where the curvature of the curve is constant, it is easier to suppress the reflection of light by the convex 21a compared to a configuration in which the curvature is larger at the center of the convex 21a. On the other hand, in a configuration where the curvature of the curve is not constant, because the convex 21a can be formed so that the angle of the convex surface of the convex 21a to the incident light is less uniform, it is possible to design the shape of the convex 21a so that the scattering effect of the reflected light from the multilayer film layer 22 is enhanced.

The period P of the arrangement of the convexes 21a coincides with the width D in the arrangement direction of the convex 21a, that is, in both directions along the sides forming the square shape. In this configuration, the surface of the uneven structure layer 21 does not have a flat portion.

The plurality of convexes 21a may be arranged with a gap between adjacent convexes 21a. In other words, the surface of the uneven structure layer 21 may have a flat portion between adjacent convexes 21a. However, in the plan view, the proportion of the flat portion per unit area of the surface of the uneven structure layer 21 is preferably 10% or less. Although the scattering of the reflected light in the region in which the multilayer film layer 22 is laminated on the flat portion is small, if the proportion of the flat portion is 10% or less, this ensures a sufficient proportion of the scattered component in the reflected light from the multilayer film layer 22, thus suitably suppressing a change in the color due to a change in the observation angle. Furthermore, if the proportion of the flat portion is 10% or less, because the proportion of the specular reflection component in the reflected light from the multilayer film layer 22 can be kept small, the burden on the eyes of the observer of the color production structure is reduced. In order to enhance such effects, it is preferable that the proportion of the flat portion is as small as possible.

A modification of the uneven structure will now be described. The shape of the convex 21a in the plan view is not limited to a square, and may be a polygon such as a triangle, a rectangle, or a hexagon, or it may be a circle. Furthermore, the shape of the plurality of convexes 21a in the plan view does not have to be constant. Moreover, the maximum height H of the plurality of convexes 21a does not have to be constant.

Here, to enhance the scattering performance of the reflected light from the multilayer film layer 22 so that reflected light emerges in more diverse directions, the angle of the surface of the convex 21a to the incident light is preferably more uneven. For example, when the shape of the convex 21a in the plan view is a quadrangular, the change in inclination of the convex surface from the vertices of the quadrangular to the center of the quadrangular and the change in inclination of the convex surface from the midpoints of the sides of the quadrangular to the center of the quadrangular are different. Thus, the variation in inclination of the surface of the convex 21a in the region of the convex surface is large. Therefore, in the form in which the shape of the convex 21a is a quadrangular, while the convex 21a has a simple shape and is easily formed, it is possible to enhance the scattering performance of the reflected light from the multilayer film layer 22.

In the plan view, when the lateral width and the longitudinal width of the convex 21a are different, the lateral width and the longitudinal width are both 40 µm or more and 50 µm or less.
The lateral width is the length of the lateral side of the rectangle when the smallest rectangle inscribed by the convex 21a is virtually arranged in the plan view. Furthermore, the longitudinal width is the length of the longitudinal side of the smallest rectangle. Moreover, the maximum height H of the convex 21a is configured by the lateral width, namely, the ratio of the maximum height H to the lateral width is 0.1 or more and 1.0 or less. The form in which the convex 21a has a square shape in the plan view is a form in which the lateral width coincides with the longitudinal width.

Furthermore, arrangement of the plurality of convexes 21a is not limited to a square grid arrangement; convexes 21a may be in another two-dimensional grid arrangement such as a hexagonal grid, or may be irregularly arranged. Moreover, periods of the arrangement of the plurality of convexes 21a may not be constant.

The greater the irregularity of the shape and the irregularity of the arrangement of the plurality of convexes 21a, the more the scattering performance of the reflected light from the multilayer film layer 22 can be enhanced. For example, in a form in which the convex 21a has a quadrangular shape in the plan view and at least one of the lateral width and the longitudinal width of adjacent convexes 21a is different, in addition to the convex 21a having a simple shape and being easily formed, it is possible to enhance the scattering performance of the reflected light from the multilayer film layer 22 compared to the form in which the shape of the plurality of convexes 21a is constant.

Furthermore, in the form in which the height of the convex 21a increases gradually from the peripheral edge toward the center, the center of gravity, of the convex 21a in the plan view, the convex surface of the convex 21a may form a straight line that joins the base end and the tip end of the convex surface in its cross-section along the thickness direction. However, in the form in which the convex surface of the convex 21a forms a curve in the cross-section, the angle of the convex surface of the convex 21a to the incident light is less uniform; hence, the scattering performance of the reflected light from the multilayer film layer 22 can be enhanced.

### [Production Method]

The method of producing the optical element 10 will now be described. As the method of forming the uneven structure of the uneven structure layer 21, transfer molding using heat or ultraviolet light, injection molding, machining such as cutting, or etching is applied. The intaglio to be used in the transfer molding or injection molding is formed by machining or etching.

For instance, an intaglio provided with a convex-concave pattern, which is the inverted form of a convex-concave pattern to be formed, is coated with a coating liquid composed of an ultraviolet curable resin serving as the material of the uneven structure layer 21, and the substrate 20 is placed on the surface of the layer composed of the coating liquid. Ultraviolet light is applied in the state where the substrate 20 and the intaglio are pressed against each other, and the intaglio is released from the layer composed of the cured resin and the substrate 20. As a result, the convex-concave pattern of the intaglio is transferred to the resin, the uneven structure layer 21 is formed having an uneven structure on the surface, and the laminate composed of the substrate 20 and the uneven structure layer 21 is formed thereby.

Next, the layers constituting the multilayer film layer 22 are sequentially laminated on the surface of the uneven structure layer 21 having the uneven structure. In the case where the high refractive index layers 22a and the low refractive index layers 22b constituting the multilayer film layer 22 are formed of an inorganic material, the high refractive index layers 22a and the low refractive index layers 22b are each formed using known thin film forming techniques such as sputtering, vacuum deposition, or atomic layer deposition. Furthermore, In the case where the high refractive index layers 22a and the low refractive index layers 22b are formed of an organic material, a known technology, such as self-assembly, may be applied to form the high refractive index layers 22a and the low refractive index layers 22b.

### [Color production Seal]

The structure in the case where the color production structure is applied to a color production seal will be described. The color production seal is attached to an adherend and is used as a decoration or the like of the adherend.

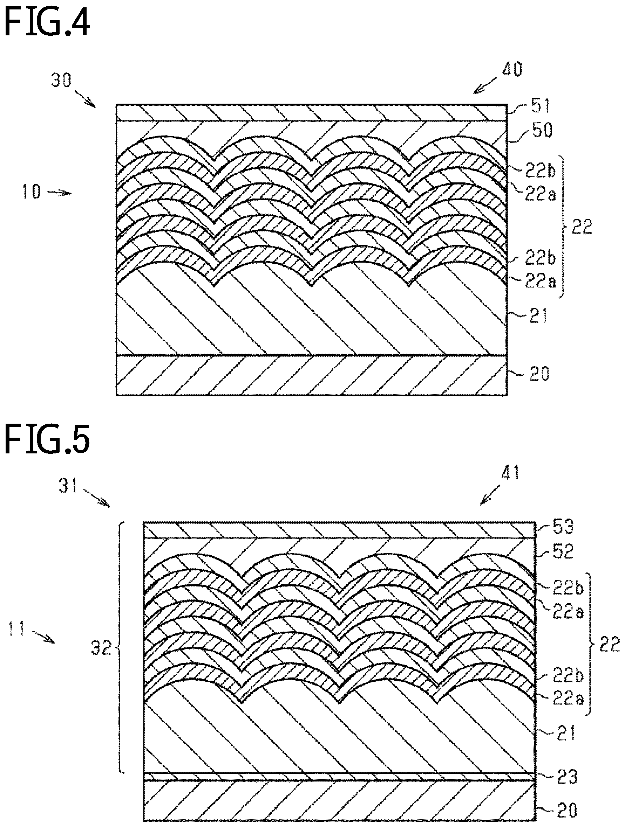

As shown in Fig. 4, the color production structure 40 constituting the color production seal 30 includes an optical element 10, an absorption layer 50, and an adhesive layer 51. The absorption layer 50 and the adhesive layer 51 are located on the opposite side of the multilayer film layer 22 to the uneven structure layer 21.

The absorption layer 50 covers the outermost uneven surface of the multilayer film layer 22. The absorption layer 50 has a light absorption property which absorbs the light transmitted through the multilayer film layer 22. For instance, the absorption layer 50 is a layer that includes a material that absorbs light in the visible range, such as a light absorbing agent or a black pigment. Specifically, the absorption layer 50 is preferably a layer in which a black inorganic pigment such as carbon black, titanium black, black iron oxide, or a black complex oxide is mixed with a resin. The film thickness of the absorption layer 50 is, 1 µm or more and 10 µm or less, for instance.

The adhesive layer 51 contact is in contact with the absorption layer 50 on the opposite side of the absorption layer 50 to the multilayer film layer 22. The surface of the adhesive layer 51 facing away from that in contact with the absorption layer 50 is the outermost layer of the color production structure 40. The adhesive layer 51 has the property of being adhesive to an adherend, and is formed of adhesive agent such as an acrylic or urethane, for instance. The film thickness of the adhesive layer 51 is, for instance, 10 µm or more and 100 µm or less.

The absorption layer 50 and the adhesive layer 51 are formed, for instance, by a known coating method, such as inkjet method, spray method, bar coating method, roll coating method, slit coating method, or gravure coating method.

The color production seal 30 is attached to the adherend so that the adhesive layer 51 is in contact with the adherend, i.e., the adherend and the uneven structure layer 21 are on opposite sides of the multilayer film layer 22. The observer observes the color production seal 30 from the side of the multilayer film layer 22 on which the uneven structure layer 21 is positioned.

As described above, of the incident light, a portion of the light outside the specific wavelength range which is reflected at the multilayer film layer 22 is transmitted through the multilayer film layer 22. Because the wavelength range of the transmitted light is different from the wavelength range of the reflected light from the multilayer film layer 22, the visibility of the color due to the reflected light decreases when such transmitted light is visually recognized. In the color production seal 30 described above, as a result of the color production structure 40 including the absorption layer 50, the light transmitted through the multilayer film layer 22 is absorbed by the absorption layer 50, thereby suppressing the transmitted light from being reflected at the surface of the adherend and the like and emerging toward the observer.

Therefore, visual observation by the observer of light in a wavelength range different from the reflected light from the multilayer film layer 22 can be suppressed; thus, deterioration in the visibility of the color due to the reflected light from the multilayer film layer 22 can be decreased. Therefore, the desired color can be provided by the color production seal 30 suitably.

### [Transfer Sheet]

The structure in the case of the color production structure being applied to a transfer sheet is described as follows. The transfer sheet is used for attaching a color production sheet to an adherend. In other words, the transfer sheet is used for transferring a color production sheet employed in the transfer sheet onto an adherend.

As shown in Fig. 5, the color production structure 41 constituting the transfer sheet 31 includes an optical element 11, an absorption layer 52, and an adhesive layer 53.

The optical element 11 includes a substrate 20, an uneven structure layer 21, and a multilayer film layer 22 having the same configuration as in the optical element 10 described above. However, in the optical element 11, the substrate 20 is configured to be detachable from the uneven structure layer 21. Specifically, the optical element 11 includes a detachable layer 23 between the substrate 20 and the uneven structure layer 21. The detachable layer 23 contains a component that functions as a release agent, such as silicone oil or a fluorine compound. This detachable layer 23 is formed on the surface of the substrate 20 by a known coating method.

The absorption layer 52 and the adhesive layer 53 are located on the opposite side of the multilayer film layer 22 to the uneven structure layer 21. The absorption layer 52 covers the outermost uneven surface of the multilayer film layer 22. The adhesive layer 53 is in contact with the absorption layer 52 on the opposite side of the absorption layer 52 to the multilayer film layer 22. The surface of the adhesive layer 53 facing away from that in contact with the absorption layer 50 is the outermost layer of the color production structure 41. The absorption layer 52 has the same configuration as the absorption layer 50 of the color production seal 30 described above, and the adhesive layer 53 has the same configuration as the adhesive layer 51 of the color production seal 30 described above.

When the transfer sheet 31 is used, the transfer sheet 31 is fixed to the surface of an adherend such that the adhesive layer 53 and the adherend are in contact with each other. Then, the substrate 20 is detached. The substrate 20 may be detached as a result of detachment occurring at the interface between the substrate 20 and the detachable layer 23, or may be detached together with the detachable layer 23 as a result of detachment occurring at the interface between the detachable layer 23 and the uneven structure layer 21. As a result, a color production sheet 32 including an uneven structure layer 21, a multilayer film layer 22, an absorption layer 52, and an adhesive layer 53 is transferred to the adherend. If the detachment occurs at the interface between the substrate 20 and the detachable layer 23, the detachable layer 23 is also included in the color production sheet 32. The outermost surface of the color production sheet 32 facing away from the outermost surface of the adhesive layer 53 is the surface of the detachable layer 23 or the uneven structure layer 21.

As described above, the transfer sheet 31 and the color production sheet 32 are attached to the adherend such that the adherend and the uneven structure layer 21 are on opposite sides of the multilayer film layer 22. The observer observes the color production sheet 32 from the side of the multilayer film layer 22 on which the uneven structure layer 21 is positioned.

In the same manner as the color production seal 30 described above, as a result of the color production structure 41 including the absorption layer 52, the light transmitted through the multilayer film layer 22 is absorbed by the absorption layer 52; thus, reflection of the transmitted light at the surface of the adherend and the like and emergence thereof toward the observer is suppressed. Therefore, because visual observation by the observer of light in a wavelength range different from the reflected light from the multilayer film layer 22 can be suppressed, it is possible to suppress deterioration in the visibility of the color due to the reflected light from the multilayer film layer 22. Thus, the desired color production can be suitably obtained in the color production sheet 32.

Furthermore, because the color production sheet 32 does not include the substrate 20, which is the substrate used during production, the flexibility of the color production sheet 32 can be enhanced. Therefore, for example, even when the adherend has a curved surface, the color production sheet 32 more easily conforms to the surface of the adherend. As a result, the load applied to the color production sheet 32 when aligning the color production sheet 32 with the surface of the adherend can be reduced, and the color production sheet 32 can be prevented from detaching from the adherend. Further, compared with the case where the color production sheet 32 has the substrate used during production, the thickness of the color production sheet 32 is smaller. Consequently, a portion of the adherend to which the color production sheet 32 is attached is prevented from being raised. Therefore, for example, when the color production sheet 32 is used for decoration, it is possible to enhance the decorative properties thereof.

Furthermore, in the color production sheet 32, the outermost surface of the multilayer film layer 22 facing away from the absorption layer 52 is covered by the uneven structure layer 21. Therefore, compared to the case where the outermost surface of the multilayer film layer 22 is externally exposed by the uneven structure layer 21 also detached, the uneven structure of the multilayer film layer 22 is to be protected without separately forming a protective layer that covers the outermost surface. As a result, it is possible to prevent the uneven structure from being deformed and difficulties in obtaining the desired color.

It is possible to omit the detachable layer 23 from the optical element 11, and to configure the substrate 20 to be detachable from the uneven structure layer 21 by adjusting the material. For example, the substrate 20 may contain a release agent, and the material of the substrate 20 and the material of the uneven structure layer 21 may be selected so that the adhesion between the substrate 20 and the uneven structure layer 21 is low.

Furthermore, when the color production sheet 32 may be transferred, heat, pressure, water pressure, ultraviolet irradiation or the like may be applied. In addition, the detachability of the substrate 20 and the adhesiveness of the adhesive layer 53 may be provided as a result of such stimuli applied during the transfer. For instance, the adhesive layer 53 may be made of a thermoplastic resin that functions as a heat sealant such as polyethylene, polyvinyl acetate, acrylic resin, polyamide, polyester, polypropylene, and polyurethane, and in such composition, the adhesiveness of the adhesive layer 53 is provided by heating.

### [Color production Article]

The positional relation between either a color production seal 30 or a color production sheet 32 attached to an adherend and an observer will now be described.

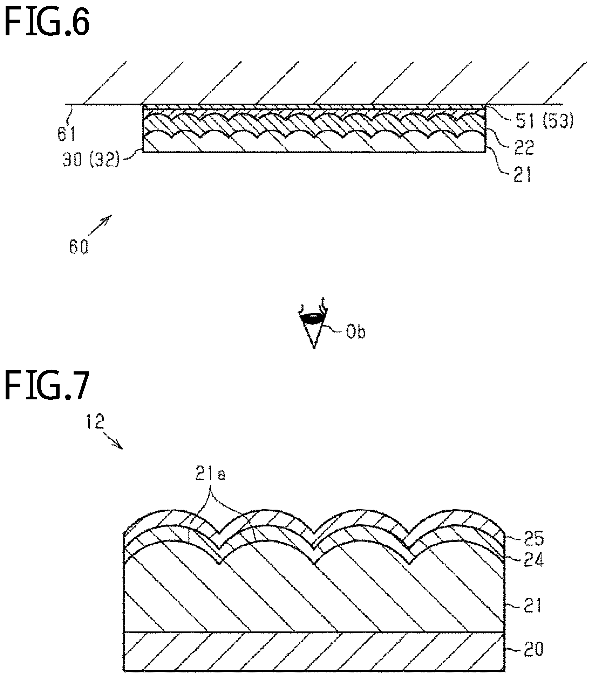

As shown in Fig. 6, an adherend 61 and a color production seal 30 or a color production sheet 32a constitute a color production article 60. The color production seal 30 is attached to the adherend 61 such that the adhesive layer 51 is in contact with the surface of the adherend 61. The color production sheet 32 is fixed to the adherend 61 by attaching the transfer sheet 31 to the adherend 61 such that the adhesive layer 53 is in contact with the surface of the adherend 61, and then detaching the substrate 20. The shape and material of the adherend 61 are not particularly limited, and the adherend 61 may, for example, be a resin molded object such as a card or a three-dimensional object, or may be paper. That is, the adherend 61 only has to have a surface to which the adhesive layers 51 and 53 can adhere.

In the state where the color production seal 30 or the color production sheet 32 is fixed to the adherend 61, the adherend 61 and the uneven structure layer 21 are on opposite sides of the multilayer film layer 22. That is, when viewed by the observer Ob, the uneven structure layer 21 is located in front of the multilayer film layer 22. In such a configuration, the observer Ob observes the color production seal 30 or the color production sheet 32 in a direction in which the uneven portions of the uneven structure layer 21 and the multilayer film layer 22 are located such that the convexes 21a protrude in a direction away from the observer Ob, or in other words, in a direction in which the uneven portions appear to be formed of concave portions which are recessed toward the rear side.

As described above, according to the color production structure of the first embodiment, the following effects can be obtained.
(1) The color production structures 40 and 41 include an uneven structure layer 21, and a multilayer film layer 22 having a surface shaped to conform to the uneven structure of the uneven structure layer 21. The width D of the convex 21a is 40 µm or more and 50 µm or less, the height of the convex 21a along the thickness direction continuously increases from the peripheral edge of the convex 21a toward its center in plan view, and the ratio of the maximum height H to the width D is 0.1 or more and 1.0 or less. According to such a configuration, because the multilayer film layer 22 has a surface shaped to conform to the uneven structure of the uneven structure layer 21, the reflected light in a specific wavelength range intensified by interference at the multilayer film layer 22 is scattered and emerges in various directions. Therefore, a change in the color caused by a change in the observation angle can be suppressed, and a specific color becomes visible across a wide range of observation angles.
(2) In the form in which the surface serving as the convex surface of the convex 21a forms a curve in the cross-section of the uneven structure layer 21 along the thickness direction, the angle of the convex surface of the convex 21a to the incident light is less uniform compared to the form in which the surface forms a straight line. Therefore, the scattering performance of the reflected light from the multilayer film layer 22 can be enhanced.
(3) In the form in which the plurality of convexes 21a are aligned in a square grid in plan view, it is easy to design the arrangement of the plurality of convexes 21a and to form the plurality of convexes 21a. Furthermore, if the convex 21a has a quadrangular shape in plan view, it is easy to arrange the plurality of convexes 21a so that the area of the flat portion is reduced.
(4) In the form in which the proportion of the flat portion included on the surface of the uneven structure layer 21 is 10% or less per unit area of the surface in plan view, because a sufficient proportion of the scattered component is ensured in the reflected light from the multilayer film layer 22, it is possible to suitably suppress a change in the color due to a change in the observation angle. Furthermore, because the proportion of the specular reflection component in the reflected light from the multilayer film layer 22 can be kept small, the burden on the eyes of the observer of the color production structures 40 and 41 is reduced.
(5) In the form in which the convex 21a has a quadrangular shape in plan view, because there is a large variation in the inclination of the convex surface of the convex 21 depending on the region of convex surface, the angle of the convex surface of the convex 21a to the incident light is less uniform. Therefore, while the convex 21a has a simple shape and is easily formed, it is possible to enhance the scattering performance of the reflected light from the multilayer film layer 22.
(6) In the form in which the convex 21a has a square shape in plan view and the width D is constant in the plurality of convexes, it is easy to arrange the plurality of convexes 21a so that the area of the flat portion is reduced. Furthermore, in a form in which the convex 21a has a quadrangular shape in the plan view and at least one of the lateral width and the longitudinal width of adjacent convexes 21a is different, it is possible to enhance the scattering performance of the reflected light from the multilayer film layer 22 compared to the form in which the shape of the plurality of convexes 21a is constant.
(7) Because reflected light due to multilayer film interference, that is, reflected light intensified by interference of light reflected at the interfaces in the multilayer film, emerges from the color production structures 40 and 41, the intensity of the reflected light is increased compared to a form using interference produced by a single layer thin film. Further, because the color production structures 40 and 41 include the absorption layers 50 and 52 that absorb the light transmitted through the multilayer film layer 22, when the color production structures 40 and 41 are viewed from the side of the multilayer film layer 22 on which the uneven structure layer 21 is positioned, visual recognition of light in a wavelength range different from that of the reflected light from the multilayer film layer 22 can be suppressed. Therefore, deterioration in the visibility of color due to the reflected light is suppressed.
(8) The color production structures 40 and 41 respectively include the adhesive layers 51 and 53 which are located such that the adhesive layers 51 and 53 and the uneven structure layer 21 are on opposite sides of the multilayer film layer 22 and which include the outermost surfaces of the color production structures 40 and 41. Such a configuration provides color production structures 40 and 41 respectively suitable for the color production seal 30 and the transfer sheet 31, which are attached to an adherend such that the adherend and the uneven structure layer 21 are on opposite sides of the multilayer film layer 22.
(9) In the color production structure 41, the substrate 20 is configured to be detachable from the uneven structure layer 21. Such a configuration provides a color production structure 41 suitable for the transfer sheet 31. Further, as a result of detaching the substrate 20, because the color production sheet 32 after being transferred from the transfer sheet 31 to the adherend 61 does not include the substrate used during production, the flexibility of the color production sheet 32 can be enhanced. Moreover, in the color production sheet 32, because the outermost surface of the multilayer film layer 22 facing away from the absorption layer 52 is covered by the uneven structure layer 21, compared to the case where the uneven structure layer 21 also becomes detached and the outermost surface of the multilayer film layer 22 is externally exposed, the uneven structure of the multilayer film layer 22 is protected without separately forming a protective layer that covers the outermost surface. As a result, it is possible to easily prevent the uneven structure from becoming deformed and causing difficulties in obtaining the desired color.

### (Second Embodiment)

A second embodiment of a color production structure will now be described with reference to Figs. 7 to 9. In the color production structure of the second embodiment, the optical element has a different structure from that in the first embodiment. In the following description, differences between the second embodiment and the first embodiment mainly are described, and like parts as in the first embodiment are indicated by like reference signs and their description is omitted.

### [Optical Element]

As shown in Fig. 7, in comparison with the optical element 10 of the first embodiment, the optical element 12 of the second embodiment includes a single layer film layer 24 and a reflective layer 25 instead of the multilayer film layer 22. Namely, the optical element 12 includes a substrate 20, an uneven structure layer 21, a single layer film layer 24, and a reflective layer 25 in this order. In the second embodiment, the single layer film layer 24 and the reflective layer 25 constitute the optical layer.

In the second embodiment, the color production structure provided with the optical element 12 is used by being observed from the side of the single layer film layer 24 on which the uneven structure layer 21 is positioned.

The configurations of the substrate 20 and the uneven structure layer 21 of the optical element 12 are the same as those of the substrate 20 and the uneven structure layer 21 included in the optical element 10 of the first embodiment. The uneven structure of the uneven structure layer 21 has the same configuration as the uneven structure described in the first embodiment. The optical element 12 does not have to include a substrate 20.

The single layer film layer 24 covers the surface of the uneven structure layer 21, and has a surface shaped to conform to the uneven structure of the uneven structure layer 21. The single layer film layer 24 is a layer composed of a single layer of a thin film made of a dielectric.

When light enters the single layer film layer 24, reflected light emerges from the single layer film layer 24 due to thin film interference. Thus, the light reflected at the front and rear interfaces of the single layer film layer 24 causes interference, and light emerges in a wavelength range that has been intensified due to the interference.

The wavelength range of the reflected light due to single layer thin film interference does not have a peak as sharp as that of the wavelength range of the reflected light due to multilayer film interference. However, by designing the single layer film layer 24 so that the wavelength range of the reflected light includes portions at and beyond the edge of the visible range, for example, so that the wavelength range of the reflected light includes the short wavelength region of the visible range up to part of the ultraviolet region, the observer is capable of visually recognizing a specific color corresponding to the short wavelength region of the visible range as the reflected light from the single layer film layer 24.

Further, by the uneven structure of the uneven structure layer 21, the angle of the interface of the single layer film layer 24 to the incident light varies in the optical element 12, the reflected light from the single layer film layer 24 is scattered and the light in the wavelength range intensified due to interference emerges in various directions. As a result, a specific color becomes visible in a wide range of observation angles

The material and film thickness of the single layer film layer 24 are selected according to the desired color to be produced by the color production structure. The single layer film layer 24 may be composed of, for instance, any one of an inorganic oxide, an inorganic nitride, and an inorganic oxynitride. The film thickness of the single layer film layer 24 is, for instance, selected from a range of 10 nm or more and 1,000 nm or less.

The reflective layer 25 is in contact with the single layer film layer 24 on the opposite side of the single layer film layer 24 to the uneven structure layer 21. The reflective layer 25 intensifies the reflection of light in the wavelength range that is intensified due to interference at the interface between the single layer film layer 24 and the reflective layer 25. Furthermore, the reflective layer 25 absorbs light that has been transmitted through the single layer film layer 24, which is not reflected at the interface. The higher the light reflectance at the interface between the single layer film layer 24 and the reflective layer 25 the more preferable, and the single layer film layer 24 and the reflective layer 25 are preferably configured so that specular reflection occurs at a high rate at the interface between these layers. In other words, it is preferable that light transmission in the reflective layer 25 is low, and the light reflection at the interface between the single layer film layer 24 and the reflective layer 25 is strong, and it is preferable that the surface of the reflective layer 25 has a metallic luster.

Specifically, it is preferable that, with respect to the wavelength range included in the light reflected at the interface between the single layer film layer 24 and the reflective layer 25, the refractive index n2 of the reflective layer 25 is greater than the refractive index n1 of the single layer film layer 24, the extinction coefficient k1 of the single layer film layer 24 is 1 or less, and the extinction coefficient k2 of the reflective layer 25 is greater than 1. It is also preferable that the visible light transmittance of the reflective layer 25 is lower than the visible light transmittance of the single layer film layer 24, and is 30% or less.

In such configuration, because a high reflectance can be obtained at the interface between the single layer film layer 24 and the reflective layer 25, and the light transmitted through the single layer film layer 24 is absorbed in the reflective layer 25, the influence of reflections at the interfaces between the layers present between the reflective layer 25 and the adherend are reduced. Therefore, the vividness of the color due to the reflected light from the color production structure is enhanced, increasing the visibility of the color.

If the reflective layer 25 is not provided, the intensity of the reflected light from the single layer film layer 24 due to thin film interference is lower than the intensity of the reflected light from the multilayer film layer 22 due to multilayer film interference in the first embodiment. Laminating the reflective layer 25 on the single layer film layer 24 increases the intensity of the reflected light; thus, the visibility of the reflected light and the visibility of the specific color due to thin film interference are enhanced.

To achieve such a single layer film layer 24 and reflective layer 25, when the single layer film layer 24 is composed of any one of an inorganic oxide, an inorganic nitride, and an inorganic oxynitride, the reflective layer 25 is preferably made of a metallic material. The examples include a form in which the single layer film layer 24 is made of titanium oxide and the reflective layer 25 is made of titanium, and a form in which the single layer film layer 24 is made of zirconium oxide and the reflective layer 25 is made of zirconium. The film thickness of the reflective layer 25 is, for instance, 10 nm or more and 1,000 nm or less.

The single layer film layer 24 and the reflective layer 25 are each formed by known thin film forming techniques such as sputtering, vacuum deposition, or atomic layer deposition, depending on the material.

### [Color production Seal and Transfer Sheet]

The structure in the case where the color production structure including the optical element 12 is applied to a color production seal and a transfer sheet will now be described.

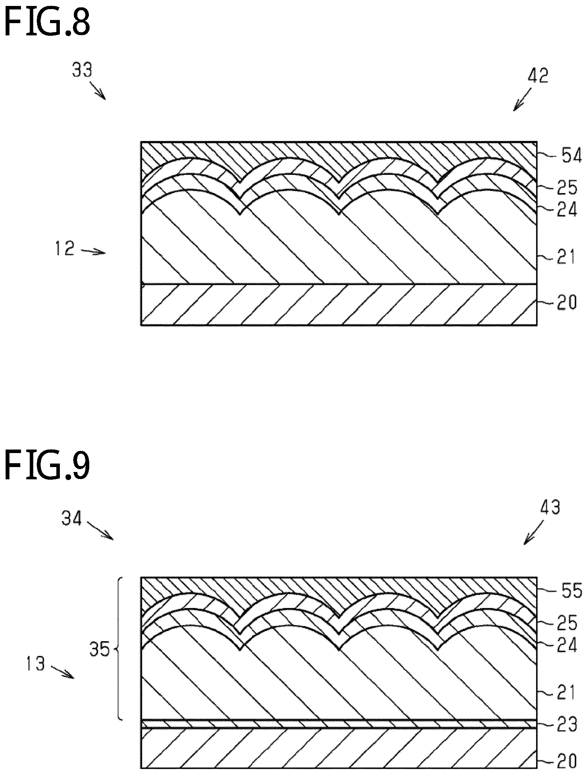

As shown in Fig. 8, the color production structure 42 constituting the color production seal 33 includes an optical element 12 and an adhesive layer 54.

The adhesive layer 54 is in contact with the reflective layer 25 on the opposite side of the single layer film layer 24 and the absorption layer 25 to the uneven structure layer 21. The surface of the adhesive layer 54 facing away from the surface in contact with the reflective layer 25 is the outermost surface of the color production structure 42. The adhesive layer 54 has the same configuration as that of the adhesive layer 51 of the first embodiment.

The color production seal 33 is attached to the adherend such that the adhesive layer 54 is in contact with the surface of the adherend, that is, such that the adherend and the uneven structure layer 21 are on opposite sides of the single film layer 24. The observer observes the color production seal 33 from the side of the single layer film layer 24 on which the uneven structure layer 21 is positioned.

As shown in Fig. 9, the color production structure 43 constituting the transfer sheet 34 includes an optical element 13, and an adhesive layer 55.

The optical element 13 includes a substrate 20, an uneven structure layer 21, a single layer film layer 24, and a reflective layer 25 having the same configuration as in the optical element 12 described above. Further, for example, as a result of the optical element 13 including a detachable layer 23 between the substrate 20 and the uneven structure layer 21, the substrate 20 is configured to be detachable from the uneven structure layer 21. The configuration relating to the detachment of the substrate 20 from the uneven structure layer 21 is the same as that of the optical element 11 of the first embodiment.

The adhesive layer 55 is in contact with the reflective layer 25 on the opposite side of single layer film layer 24 and the absorption layer 25 to the uneven structure layer 21. The surface of the adhesive layer 55 facing away from the surface in contact with the reflective layer 25 is the outermost surface of the color production structure 43. The adhesive layer 55 has the same configuration as that of the adhesive layer 54 of the color production seal 33 described above.

As a result of fixing the transfer sheet 34 to the surface of the adherend such that the adhesive layer 55 and the adherend are in contact with each other, and then detaching the substrate 20, the color production sheet 35 including the uneven structure layer 21, the single layer film layer 24, the reflective layer 25, and the adhesive layer 55 is transferred to the adherend. If detachment occurs at the interface between the substrate 20 and the detachable layer 23, the detachable layer 23 is also included in the color production sheet 35. The outermost surface of the color production sheet 35 facing away from the outermost layer of the adhesive layer 55 is a surface of the detachable layer 23 or the uneven structure layer 21.

As described above, the transfer sheet 34 and the color production sheet 35 are attached to the adherend such that the adherend and the uneven structure layer 21 are on opposite sides of the single layer film layer 24. The observer observes the color production sheet 35 from the side of the single layer film layer 24 on which the uneven structure layer 21 is positioned.

It is possible to omit the detachable layer 23 from the optical element 13, and to configure the substrate 20 to be detachable from the uneven structure layer 21 by adjusting the material. Furthermore, when the color production sheet 35 is transferred, heat, pressure, water pressure, ultraviolet irradiation or the like may be applied. In addition, the detachability of the substrate 20 and the adhesiveness of the adhesive layer 53 may be provided as a result of such stimuli applied during the transfer.

In the state where the color production seal 33 or the color production sheet 35 of the second embodiment is fixed to the adherend, the uneven structure layer 21 is located such that the adherend and the uneven structure layer 21 are on opposite sides of the single layer film layer 24. That is, when viewed by the observer Ob, the uneven structure layer 21 is located in front of the single layer film layer 24. In such a configuration, as with the first embodiment, the observer Ob observes the color production seal 33 or the color production sheet 35 in a direction in which the uneven portions of the uneven structure layer 21 and the single layer film layer 24 are located such that the convexes 21a protrude in a direction away from the observer Ob.

The color production structure of the second embodiment described above achieves the same effects as (1) to (6), (8), and (9) of the first embodiment, where the multilayer film layer 22 is replaced by the single layer film layer 24, and the following effects.

(10) Because the layer for causing interference is formed of a thin film of a single layer, the number of steps required to produce the color production structures 42 and 43 can be reduced compared to the form in which multilayer film interference is used.

(11) The reflective layer 25, which intensifies the reflection of light in the wavelength range intensified due to interference, is laminated on the single layer film layer 24. Such a configuration increases the intensity of the reflected light emerging from the color production structures 42 and 43. Therefore, the visibility of color due to the reflected light is enhanced.

### (Third Embodiment)

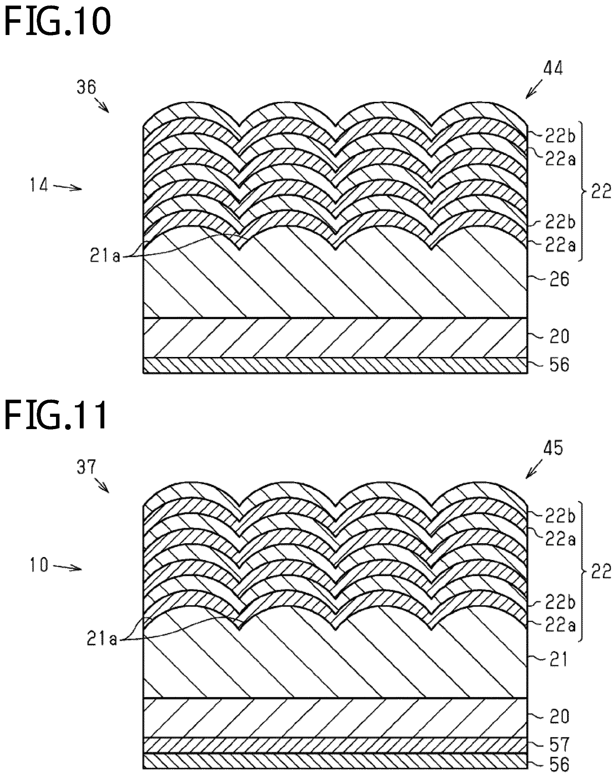

A third embodiment of a color production structure will now be described with reference to Figs. 10 to 12. In the third embodiment, the direction in which the color production structure is observed is different from the first embodiment. In the following description, differences between the third embodiment and the first embodiment mainly are described, and like parts as in the first embodiment are indicated by like reference signs and their description is omitted.

### [Color production Seal]

The structure in the case where the color production structure of the third embodiment is applied to a color production seal will now be described.

As shown in Fig. 10, the color production structure 44 constituting the color production seal 36 includes an optical element 14 and an adhesive layer 56. The color production seal 36 of the third embodiment is attached to the adherend such that the adherend is located on the same side of the multilayer film layer 22 as the uneven structure layer 26. The observer observes the color production seal 36 from the opposite side of the multilayer film layer 22 to the uneven structure layer 26.

The optical element 14 includes a substrate 20, an uneven structure layer 26, and a multilayer film layer 22. The configurations of the substrate 20 and the multilayer film layer 22 are the same as those of the substrate 20 and the multilayer film layer 22 included in the optical element 10 of the first embodiment.

The uneven structure layer 26 has an uneven structure with the same configuration as the uneven structure of the uneven structure layer 21 described in the first embodiment. However, the uneven structure layer 26 of the third embodiment shields the light transmitted through the multilayer film layer 22. For example, the uneven structure layer 26 has the property of absorbing the light transmitted through the multilayer film layer 22, and includes a material that absorbs light in the visible range, such as a light absorber or a black pigment. Specifically, the uneven structure layer 26 is a layer in which a black inorganic pigment such as carbon black, titanium black, black iron oxide, or a black complex oxide is mixed with a resin. Alternatively, the uneven structure layer 26 may be a layer containing a metallic material.

The adhesive layer 56 is located such that the adhesive layer 56 and the multilayer film layer 22 are on both sides of the uneven structure layer 26, and is in contact with the substrate 20. The surface of the adhesive layer 56 facing away from the surface in contact with the substrate 20 is the outermost layer of the color production structure 44. Except for the position inside the color production structure, the adhesive layer 56 has the same configuration as that of the adhesive layer 51 of the first embodiment.

The optical element 14 does not have to include the substrate 20. If the optical element 14 does not include the substrate 20, the adhesive layer 56 is in contact with the surface of the uneven structure layer 26 facing away from the surface having the uneven structure. Further, the surface of the adhesive layer 56 facing away from that in contact with the uneven structure layer 26 is the outermost layer of the color production structure 44.

In the color production seal 36 of the third embodiment, the light transmitted through the multilayer film layer 22 is shielded by the uneven structure layer 26, thereby suppressing the transmitted light from being reflected at the surface of the adherend and the like and emerging toward the observer. As a result, because visual observation by the observer of light in a different wavelength range from the reflected light from the multilayer film layer 22 can be suppressed, it is possible to suppress deterioration in the visibility of the color due to the reflected light from the multilayer film layer 22.

Note that, instead of the uneven structure layer 26, the substrate 20 may have the property of shielding the light transmitted through the multilayer film layer 22; and further, a layer that has the property of shielding the light transmitted through the multilayer film layer 22 may be provided in addition to the uneven structure layer 26. For example, the color production structure 45 constituting the color production seal 37 shown in Fig. 11 includes the optical element 10 of the first embodiment, that is, an optical element 10 composed of a substrate 20 made of a transparent material and an uneven structure layer 21, an absorption layer 57, and an adhesive layer 56.

The absorption layer 57 is located such that the absorption layer 57 and the multilayer film layer 22 are on opposite sides of the uneven structure layer 21, and is in contact with the surface of the substrate 20 opposite to that in contact with the uneven structure layer 21. As with the absorption layer 50 of the first embodiment, the absorption layer 57 is a layer that includes a material that absorbs light in the visible range, such as a light absorber or a black pigment, and has a light absorption property of absorbing the light transmitted through the multilayer film layer 22. If the optical element 10 does not include the substrate 20, the absorption layer 57 is in contact with the surface of the uneven structure layer 21 facing away from the surface having the uneven structure. The adhesive layer 56 is in contact with the absorption layer 57 on the opposite side of the absorption layer 57 to the uneven structure layer 21.

In the color production seal 37 configured as described above, the light transmitted through the multilayer film layer 22 is absorbed by the absorption layer 57, thereby suppressing the transmitted light from being reflected at the surface of the adherend and the like and emerging toward the observer. As a result, deterioration in the visibility of color due to the reflected light is suppressed.

The color production structures 44 and 45 may include a protective layer that protects the surface of the multilayer film layer 22 facing away from the uneven structure layers 21 and 26. The protective layer is, for example, made of a transparent resin, and protects the uneven structure on the surface of the multilayer film layer 22. In contrast, in a form in which the surface of the multilayer film layer 22 is exposed, and the outermost surfaces of the color production structures 44 and 45 facing away from the adhesive layer 56, that is, the outermost surfaces which are exposed to the outside air, are surfaces of a multilayer film layer 22 made of an inorganic material, the weather resistance of the color production structures 44 and 45 is enhanced.

### [Color production Article]

The positional relations between color production seals 36 and 37 attached to an adherend and an observer will now be described.

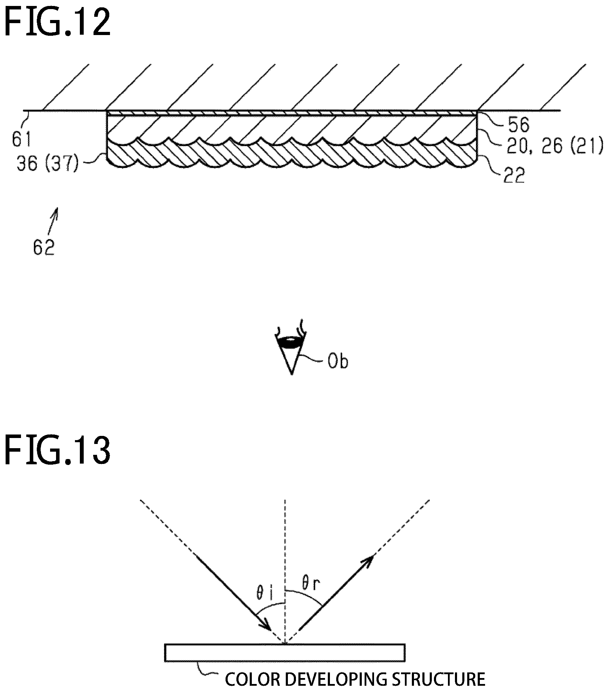

As shown in Fig. 12, an adherend 61 and a color production seal 36 or a color production sheet 37 constitute a color production article 62. The color production seals 36 and 37 are attached to the adherend 61 such that the adhesive layer 56 is in contact with the surface of the adherend 61.

In the state where the color production seals 36 and 37 are fixed to the adherend 61, the uneven structure layers 26 and 21 are located on the multilayer film layer 22 on the same side as the adherend 61. That is, when viewed by the observer Ob, the uneven structure layers 26 and 21 are located behind the multilayer film layer 22. In such a configuration, the observer Ob observes the color production seals 36 and 37 in a direction in which the uneven portions of the uneven structure layers 26 and 21 and the multilayer film layer 22 are located such that the convexes 21a protrude toward the observer Ob.

As described above, according to the color production structure of the third embodiment, the following effects can be obtained in addition to the same effects (1) to (6) of the first embodiment.
(12) Because reflected light due to multilayer film interference, i.e., reflected light intensified by interference of light reflected at the interfaces in the multilayer film, emerges from the color production structures 44 and 45, the intensity of the reflected light is increased compared to a form using interference produced by a single layer thin film. Further, because the color production structures 44 and 45 include a layer that shields the light transmitted through the multilayer film layer 22, when viewed from the side of the uneven structure layers 26 and 21 on which the multilayer film layer 22 is positioned, visual recognition of light in a different wavelength range from that of the reflected light from the multilayer film layer 22 can be suppressed. Therefore, deterioration in the visibility of color due to the reflected light is suppressed.

In particular, in the form described above in which the layer having the property of shielding the transmitted light is the uneven structure layer 26, because the layer having the uneven structure also serves as the layer having the shielding property, a configuration in which the light transmitted through the multilayer film layer 22 is shielded without increasing the number of constituent layers of the color production structure 44 can be achieved. Therefore, it is easy to form a color production structure 44 thinly.

On the other hand, in the form in which the absorption layer 57 having the property of shielding the transmitted light is provided in addition to the substrate 20 and the uneven structure layer 21, because the respective functions of the uneven structure layer 21 and the absorption layer 57 are specialized, each layer can be formed of a material suitable for the function of each layer. For example, it is possible to form the uneven structure layer 21 from a material that more readily forms an uneven structure, and to form the absorption layer 57 from a material with enhanced light absorption properties. Therefore, each layer can be more easily formed, and the function of each layer can be enhanced.

(13) The color production structures 44 and 45 include the adhesive layer 56, which is located such that the adhesive layer 56 and the multilayer film layer 22 are on both sides of the uneven structure layers 21 and 26, and which includes the outermost surfaces of the color production structures 44 and 45. Such a configuration provides color production structures 44 and 45 which are suitable for the color production seals 36 and 37 to be attached to the adherend such that the adherend is located on the same side of the multilayer film layer 22 as the uneven structure layers 21 and 26.

### [Modifications]

The embodiments above may also be implemented with the modifications described below.
· In the first embodiment and the third embodiment, when each of the absorption layers 50, 52 and 57 and the uneven structure layer 26 does not absorb entire light in the visible range, but has a light absorption property of absorbing at least part of the light transmitted through the multilayer film layer 22, it is possible to suppress the deterioration in visibility of the color due to the reflected light from the multilayer film layer 22 compared to a configuration in which a layer having such a light absorption property is not employed. For example, the layers described above may be layers that include a pigment having a color corresponding to the wavelength range of the light transmitted through the multilayer film layer 22. However, if the layers above are black layers containing a black pigment, because it is not necessary to adjust the absorption wavelength according to the wavelength range of the transmitted light or the like, and the layers absorb light over a wide wavelength range, it is possible to easily and suitably suppress the decrease in visibility of the color due to the reflected light from the multilayer film layer 22.
· In the first embodiment and the third embodiment, the color production structure does not have to include a layer that has the property of absorbing the light transmitted through the multilayer film layer 22. For example, if the color production seal or the color production sheet is attached to an adherend which does not readily reflect light, the visibility of the color due to the reflected light from the multilayer film layer 22 is well obtained without a layer that has the property of absorbing the light transmitted through the multilayer film layer 22.
· In the second embodiment, the single layer film layer 24 and the reflective layer 25 are configured such that a high reflectance is exhibited with respect to at least part of the wavelength range included in the reflected light at the interface between the single layer film layer 24 and the reflective layer 25. Even in a configuration where the reflectance of part of the wavelength range of the reflected light is high, the effect of enhancing the intensity of the reflected light can be obtained, compared to a configuration where the reflectance of the entire wavelength range of the reflected light is low. Specifically, with respect to the at least part of the wavelength range, the refractive index n2 of the reflective layer 25 is greater than the refractive index n1 of the single layer film layer 24, the extinction coefficient k1 of the single layer film layer 24 is 1 or less, and the extinction coefficient k2 of the reflective layer 25 is greater than 1.
· The color production structure of the third embodiment, i.e., the color production structure observed from the opposite side of the multilayer film layer 22 to the uneven structure layers 21 and 26, may be applied to a transfer sheet. In this case, for instance, the transfer sheet is comprised of a color production structure having a structure in which a detachable substrate that is detached during transfer is laminated on the opposite side of the multilayer film layer 22 to the uneven structure layers 21 and 26. Furthermore, the transfer sheets 31 and 34 of the first embodiment and the second embodiment may include an additional substrate other than the substrate 20, which is the substrate used during production, as a detachable substrate which is detached during transfer. Moreover, in the transfer sheets 31 and 34 of the first embodiment and the second embodiment, the uneven structure layer 21 and the multilayer film layer 22 or the single layer film layer 24 may be configured to be detachable from each other, and the substrate 20 and the uneven structure layer 21 may be detached during transfer.
· The color production structure may include the multilayer film layer 22 and the reflective layer 25. In other words, in the second embodiment, the color production structure may include the multilayer film layer 22 instead of the single layer film layer 24.
· The uneven structure of the uneven structure layers 21 and 26 may be comprised of a plurality of concave portions that are recessed with respect to the multilayer film layer 22 or the single layer film layer 24. That is, the uneven structure is comprised of a plurality of uneven elements which are convexes or concave portions. If the uneven elements are concave portions, the same configuration as the shape of the convexes 21a is applied to the shape of the concave portions in plan view. That is, each of the lateral width and the longitudinal width of the concave portion in plan view is 40 µm or more and 50 µm or less. Furthermore, the same configuration as the height of the convex 21a is applied to the configuration relating to the depth of the concave portion. That is, the depth of the concave portion, which is the dimension thereof along the thickness direction of the uneven structure layers 21 and 26, continuously increases from the peripheral edge of the concave portion toward its center in plan view, and the maximum ratio of the depth to the lateral width in the concave portion is 0.1 or more and 1.0 or less.
· In addition to the layers described in the embodiments above, the color production structure may include a layer for enhancing the adhesion between the layers, a layer having an ultraviolet absorbing function, and the like.

### [Example]

The color production structure described above will be described using a specific example.

The color production structure of the present example has a structure in which an uneven structure layer made of an ultraviolet curable resin, and a multilayer film layer in which five layers of a TiO₂ thin film and five layers of an SiO₂ thin film are alternately laminated, are formed in this order on a substrate made of polyethylene terephthalate.

First, a plate for forming the uneven structure was prepared. The plate is a cut plate produced by cutting a plating layer made of nickel with a cutting blade. On the surface of the plating layer, concave portions, in which square regions having sides of 45 µm in plan view were cut with a continuous change in the depth so as to form an arc from the peripheral edge to the center, were formed without gaps. The etching depth at the center of the square region was 7 µm. The surface of the cut plate was coated with an OPTOOL HD-1100 (manufactured by Daikin Industries, Ltd.) as a release agent, the cut plate was pressed against a polyethylene terephthalate substrate coated with an ultraviolet curable resin, and the ultraviolet curable resin was cured by irradiation of light having a wavelength of 365 nm from the side on which the substrate was positioned. The ultraviolet curable resin was released from the cut plate, and a laminate was obtained in which an uneven structure layer made of the cured ultraviolet curable resin was formed on the substrate. Next, five layers of a TiO₂ thin film having a thickness of 60 nm and five layers of an SiO₂ thin film having a thickness of 80 nm were alternately laminated by vacuum deposition on the uneven structure layer, to obtain the color production structure of the example. The TiO₂ thin film is a high refractive index layer, and the SiO₂ thin film is a low refractive index layer.

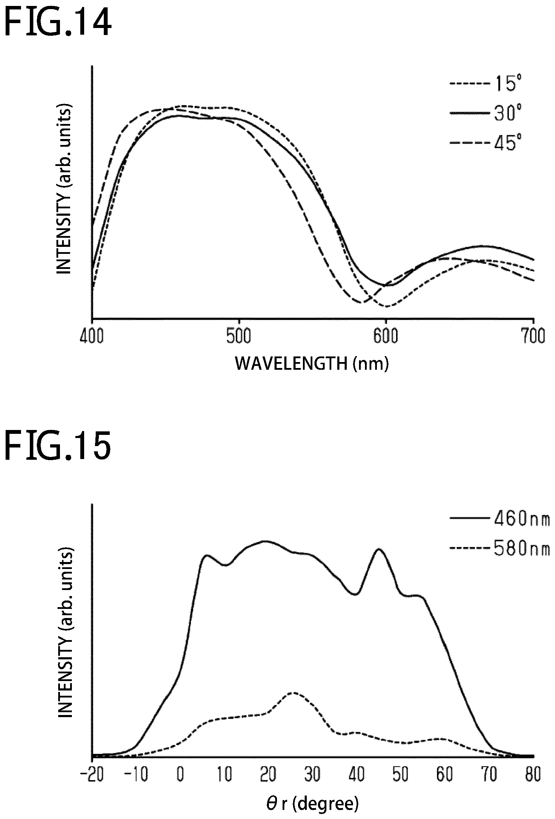

Using an optical system in which the incidence angle θi and the reflection angle θr with respect to the color production structure can each be independently set as shown in Fig. 13, the reflection characteristics of the surface reflections were examined for the color production structure of the example. Fig. 14 shows the measurement results of the reflection spectral characteristics obtained at each of the reflection angles θr of 15°, 30° and 45° using an incidence angle θi fixed at 30°. At each of the reflection angles θr of 15°, 30° and 45°, a wavelength-selective reflection spectrum was observed due to multilayer film interference between the TiO₂ thin films and the SiO₂ thin films. With multilayer film interference in a multilayer film layer formed on a flat surface, wavelength-selective reflection was only observed under the condition that the incidence angle θi and the reflection angle θr were equal. In contrast, in the color production structure of the present example, a reflection spectrum in which the blue wavelength range was selectively reflected was observed under the condition in which the incidence angle θi and the reflection angle θr differed by 15°. Therefore, in the color production structure of the present example, as a result of forming a multilayer film layer made of TiO₂ thin films and SiO₂ thin films on an uneven structure layer made of an ultraviolet curable resin, it was found that a scattering performance had been imparted due to such a structure.

Furthermore, in order to examine the angle range in which the scattering performance was obtained, the dependence of the intensity of reflected light having a wavelength of 460 nm and a wavelength of 580 nm on the reflection angle θr was measured using an incidence angle θi fixed at 30°. The results are shown in Fig. 15. As shown in Fig. 15, it was found that the color production structure of the present example selectively reflected the blue wavelength range over an angle range of about 80°.

## Claims

1. A color production structure comprising:
a structure layer (21) having an uneven structure on a surface thereof, the uneven structure comprising a plurality of uneven elements each being a convex (21a) or a concave portion; and
an optical layer which is a laminated film (22) on the uneven structure and has a surface shaped to conform to the uneven structure, the optical layer configured such that reflected light enhanced by interference emerges from the optical layer,
each of the uneven elements having a longitudinal width (D) and a lateral width (D) in plan view along a thickness direction of the structure layer, each of the longitudinal width (D) and lateral width (D) of the respective uneven elements having a value within a range from 40 µm to 50 µm inclusive,
each of the uneven elements having a dimension in the thickness direction of the structure layer, the dimension of each uneven element continuously increasing from a peripheral edge to a center thereof in the plan view,
a ratio of a maximum value (H) of the dimension of each of the uneven elements to the lateral width thereof being set to be within a range from 0.1 to 1.0 inclusive.

2. The color production structure according to claim 1, wherein a surface of each of the uneven elements forms a curve in a cross-section of the structure layer along the thickness direction.

3. The color production structure according to claim 1 or 2, wherein, in the plan view, the plurality of uneven elements are arranged in a square grid.

4. The color production structure according to any one of claims 1 to 3, wherein a proportion of a flat portion included on the surface of the structure layer is 10% or less per unit area of the surface of the structure layer in the plan view.

5. The color production structure according to any one of claims 1 to 4, wherein, in the plan view, each of the uneven elements has a square shape in which the lateral width and the longitudinal width are equal, and the lateral width and the longitudinal width are constant in the plurality of uneven elements.

6. The color production structure according to any one of claims 1 to 4, wherein, in the plan view, each of the uneven elements has a quadrangular shape, and at least one of the lateral width and the longitudinal width is different between adjacent uneven elements.

7. The color production structure according to any one of claims 1 to 6, further comprising an absorption layer located on an opposite side of the optical layer to the structure layer, wherein
the optical layer is a laminate of a plurality of dielectric thin films, in which mutually adjacent dielectric thin films have refractive indexes which are different from each other, and
the absorption layer has a light absorption property of absorbing at least a portion of light transmitted through the optical layer.

8. The color production structure according to any one of claims 1 to 6, wherein the optical layer is comprised of a dielectric thin film in contact with the structure layer, and a reflective film in contact with the dielectric thin film on a side opposite to that facing the structure layer.

9. The color production structure according to claim 7 or 8, further comprising an adhesive layer located on an opposite side of the optical layer to the structure layer, the adhesive layer including an outermost surface of the color production structure.

10. The color production structure according to any one of claims 7 to 9, further comprising a substrate located on an opposite side of the structure layer to the optical layer, the substrate configured to be detachable from the structure layer.

11. The color production structure according to any one of claims 1 to 6, wherein
the optical layer is a laminate of a plurality of dielectric thin films, in which mutually adjacent dielectric thin films have refractive indexes which are different from each other, and
the structure layer shields at least a portion of light transmitted through the optical layer.

12. The color production structure according to any one of claims 1 to 6, further comprising an absorption layer located on an opposite side of the structure layer to the optical layer, wherein
the optical layer is a laminate of a plurality of dielectric thin films, in which mutually adjacent dielectric thin films have refractive indexes which are different from each other, and
the absorption layer has a light absorption property of absorbing at least a portion of light transmitted through the optical layer.

13. The color production structure according to claim 11 or 12, further comprising an adhesive layer located on an opposite side of the structure layer to the optical layer, the adhesive layer including an outermost surface of the color production structure.

## Patentansprüche

1. Struktur zur Herstellung von Farbe, umfassend:
eine Strukturschicht (21) mit einer unebenen Struktur auf einer Oberfläche davon, wobei die unebene Struktur eine Vielzahl von unebenen Elementen umfasst, wobei jedes ein konvexer (21a) oder ein konkaver Abschnitt ist; und
eine optische Schicht, die ein laminierter Film (22) auf der unebenen Struktur ist und eine Oberfläche aufweist, die dazu geformt ist, sich der unebenen Struktur anzupassen, wobei die optische Schicht so konfiguriert ist, dass reflektiertes Licht, das durch Interferenz verstärkt ist, aus der optischen Schicht austritt,
wobei jedes der unebenen Elemente in einer Draufsicht entlang einer Dickenrichtung der Strukturschicht eine longitudinale Breite (D) und eine seitliche Breite (D) aufweist, wobei jede der longitudinalen Breite (D) und seitlichen Breite (D) der jeweiligen unebenen Elemente einen Wert innerhalb eines Bereichs von 40 µm bis einschließlich 50 µm aufweisen,
wobei jedes der unebenen Elemente eine Ausdehnung in der Dickenrichtung der Strukturschicht aufweist, wobei die Ausdehnung jedes unebenen Elements von einem peripheren Rand zu einer Mitte davon in der Draufsicht kontinuierlich zunimmt,
wobei ein Verhältnis eines Maximalwerts (H) der Ausdehnung jedes der unebenen Elemente zu der seitlichen Breite davon so eingestellt ist, dass es innerhalb eines Bereichs von 0,1 bis einschließlich 1,0 liegt.

2. Struktur zur Herstellung von Farbe nach Anspruch 1, wobei eine Oberfläche jedes der unebenen Elemente eine Kurve in einem Querschnitt der Strukturschicht entlang der Dickenrichtung bildet.

3. Struktur zur Herstellung von Farbe nach Anspruch 1 oder 2, wobei in der Draufsicht die Vielzahl der unebenen Elemente in einem quadratischen Gitter angeordnet ist.

4. Struktur zur Herstellung von Farbe nach einem der Ansprüche 1 bis 3, wobei ein Anteil eines flachen Abschnitts, der auf der Oberfläche der Strukturschicht enthalten ist, 10% oder weniger pro Flächeneinheit der Oberfläche der Strukturschicht in der Draufsicht beträgt.

5. Struktur zur Herstellung von Farbe nach einem der Ansprüche 1 bis 4, wobei in der Draufsicht jedes der unebenen Elemente eine quadratische Form aufweist, in der die seitliche Breite und die longitudinale Breite gleich sind, und die seitliche Breite und die longitudinale Breite in der Vielzahl der unebenen Elemente konstant sind.

6. Struktur zur Herstellung von Farbe nach einem der Ansprüche 1 bis 4, wobei in der Draufsicht jedes der unebenen Elemente eine viereckige Form aufweist, und mindestens eine der seitlichen Breite und der longitudinalen Breite zwischen benachbarten unebenen Elementen unterschiedlich ist.

7. Struktur zur Herstellung von Farbe nach einem der Ansprüche 1 bis 6, ferner umfassend eine Absorptionsschicht, die sich auf einer gegenüberliegenden Seite der optischen Schicht zu der Strukturschicht befindet, wobei
die optische Schicht ein Laminat aus einer Vielzahl von dielektrischen dünnen Filmen ist, in dem aneinander angrenzende dielektrische dünne Filme Brechungsindizes aufweisen, die sich voneinander unterscheiden, und
die Absorptionsschicht eine Lichtabsorptionseigenschaft aufweist, die darin besteht, mindestens einen Teil des durch die optische Schicht durchgelassenen Lichts zu absorbieren.

8. Struktur zur Herstellung von Farbe nach einem der Ansprüche 1 bis 6, wobei die optische Schicht von einem dielektrischen dünnen Film, der in Kontakt mit der Strukturschicht ist, und von einem reflektierenden Film, der in Kontakt mit dem dielektrischen dünnen Film auf einer Seite, die der der Strukturschicht zugewandten Seite gegenüberliegt, ist, umfasst ist.

9. Struktur zur Herstellung von Farbe nach Anspruch 7 oder 8, ferner umfassend eine Klebstoffschicht, die sich auf einer gegenüberliegenden Seite der optischen Schicht zu der Strukturschicht befindet, wobei die Klebstoffschicht eine äußerste Oberfläche der Struktur zur Herstellung von Farbe umfasst.

10. Struktur zur Herstellung von Farbe nach einem der Ansprüche 7 bis 9, ferner umfassend ein Substrat, das sich auf einer gegenüberliegenden Seite der Strukturschicht zu der optischen Schicht befindet, wobei das Substrat dazu konfiguriert ist, von der Strukturschicht abnehmbar zu sein.

11. Struktur zur Herstellung von Farbe nach einem der Ansprüche 1 bis 6, wobei
die optische Schicht ein Laminat aus einer Vielzahl von dielektrischen dünnen Filmen ist, in dem aneinander angrenzende dielektrische dünne Filme Brechungsindizes aufweisen, die sich voneinander unterscheiden, und
die Strukturschicht mindestens einen Teil des durch die optische Schicht durchgelassenen Lichts abschirmt.

12. Struktur zur Herstellung von Farbe nach einem der Ansprüche 1 bis 6, ferner umfassend eine Absorptionsschicht, die sich auf einer gegenüberliegenden Seite der Strukturschicht zu der optischen Schicht befindet, wobei
die optische Schicht ein Laminat aus einer Vielzahl von dielektrischen dünnen Filmen ist, in dem aneinander angrenzende dielektrische dünne Filme Brechungsindizes aufweisen, die sich voneinander unterscheiden, und
die Absorptionsschicht eine Lichtabsorptionseigenschaft aufweist, die darin besteht, mindestens einen Teil des durch die optische Schicht durchgelassenen Lichts zu absorbieren.

13. Struktur zur Herstellung von Farbe nach Anspruch 11 oder 12, ferner umfassend eine Klebstoffschicht, die sich auf einer gegenüberliegenden Seite der Strukturschicht zu der optischen Schicht befindet, wobei die Klebstoffschicht eine äußerste Oberfläche der Struktur zur Herstellung von Farbe umfasst.

## Revendications

1. Structure de production de couleur comprenant :
une couche de structure (21) comportant une structure irrégulière sur une surface de celle-ci, la structure irrégulière comprenant une pluralité d'éléments irréguliers qui sont chacun une partie convexe (21a) ou une partie concave ; et
une couche optique qui est un film stratifié (22) sur la structure irrégulière et a une surface façonnée pour épouser la structure irrégulière, la couche optique étant configurée de sorte qu'une lumière réfléchie améliorée par interférence émerge de la couche optique,
chacun des éléments irréguliers présentant une largeur longitudinale (D) et une largeur latérale (D) dans une vue en plan dans une direction d'épaisseur de la couche de structure, chacune de la largeur longitudinale (D) et de la largeur latérale (D) des éléments irréguliers respectifs présentant une valeur à l'intérieur d'une plage de 40 µm à 50 µm inclus,
chacun des éléments irréguliers présentant une dimension dans la direction d'épaisseur de la couche de structure, la dimension de chaque élément irrégulier augmentant continuellement depuis un bord périphérique jusqu'à un centre de celui-ci dans la vue en plan,
un rapport d'une valeur maximale (H) de la dimension de chacun des éléments irréguliers sur la largeur latérale de celui-ci étant réglé pour être à l'intérieur d'une plage de 0,1 à 1,0 inclus.

2. Structure de production de couleur selon la revendication 1, dans laquelle une surface de chacun des éléments irréguliers forme une courbe dans une coupe transversale de la couche de structure dans la direction d'épaisseur.

3. Structure de production de couleur selon la revendication 1 ou 2, dans laquelle, dans la vue en plan, la pluralité d'éléments irréguliers sont agencés dans une grille carrée.

4. Structure de production de couleur selon l'une quelconque des revendications 1 à 3, dans laquelle une proportion d'une partie plate incluse sur la surface de la couche de structure est inférieure ou égale à 10 % par unité de superficie de la surface de la couche de structure dans la vue en plan.

5. Structure de production de couleur selon l'une quelconque des revendications 1 à 4, dans laquelle, dans la vue en plan, chacun des éléments irréguliers présente une forme carrée dans laquelle la largeur latérale et la largeur longitudinale sont égales, et la largeur latérale et la largeur longitudinale sont constantes dans la pluralité d'éléments irréguliers.

6. Structure de production de couleur selon l'une quelconque des revendications 1 à 4, dans laquelle, dans la vue en plan, chacun des éléments irréguliers présente une forme quadrangulaire, et au moins l'une de la largeur latérale et de la largeur longitudinale est différente entre des éléments irréguliers adjacents.

7. Structure de production de couleur selon l'une quelconque des revendications 1 à 6, comprenant en outre une couche d'absorption située sur un côté de la couche optique à l'opposé de la couche de structure, dans laquelle
la couche optique est un stratifié d'une pluralité de films minces diélectriques, dans lequel des films minces diélectriques mutuellement adjacents présentent des indices de réfraction qui sont différents les uns des autres, et
la couche d'absorption présente une propriété d'absorption de lumière d'absorption d'au moins une partie d'une lumière transmise à travers la couche optique.

8. Structure de production de couleur selon l'une quelconque des revendications 1 à 6, dans laquelle la couche optique est constituée d'un film mince diélectrique en contact avec la couche de structure, et d'un film réfléchissant en contact avec le film mince diélectrique sur un côté à l'opposé de celui faisant face à la couche de structure.

9. Structure de production de couleur selon la revendication 7 ou 8, comprenant en outre une couche adhésive située sur un côté de la couche optique à l'opposé de la couche de structure, la couche adhésive comportant une surface extérieure de la structure de production de couleur.

10. Structure de production de couleur selon l'une quelconque des revendications 7 à 9, comprenant en outre un substrat situé sur un côté de la couche de structure à l'opposé de la couche optique, le substrat étant configuré pour être détachable de la couche de structure.

11. Structure de production de couleur selon l'une quelconque des revendications 1 à 6, dans laquelle
la couche optique est un stratifié d'une pluralité de films minces diélectriques, dans lequel des films minces diélectriques mutuellement adjacents présentent des indices de réfraction qui sont différents les uns des autres, et
la couche de structure fait écran à au moins une partie d'une lumière transmise à travers la couche optique.

12. Structure de production de couleur selon l'une quelconque des revendications 1 à 6, comprenant en outre une couche d'absorption située sur un côté de la couche de structure à l'opposé de la couche optique, dans laquelle
la couche optique est un stratifié d'une pluralité de films minces diélectriques, dans lequel des films minces diélectriques mutuellement adjacents présentent des indices de réfraction qui sont différents les uns des autres, et
la couche d'absorption présente une propriété d'absorption de lumière d'absorption d'au moins une partie d'une lumière transmise à travers la couche optique.

13. Structure de production de couleur selon la revendication 11 ou 12, comprenant en outre une couche adhésive située sur un côté de la couche de structure à l'opposé de la couche optique, la couche adhésive comportant une surface extérieure de la structure de production de couleur.
